(19) Europäisches Patentamt
European Patent Office
Office européen des brevets

(11) **EP 0 971 988 B1**

(12) **FASCICULE DE BREVET EUROPEEN**

(45) Date de publication et mention
de la délivrance du brevet:
**03.07.2002   Bulletin 2002/27**

(51) Int Cl.[7]: **C09C 3/04**, C09C 1/28,
C09C 1/42, C09C 1/40

(21) Numéro de dépôt: **98917199.6**

(22) Date de dépôt: **20.03.1998**

(86) Numéro de dépôt international:
**PCT/FR98/00569**

(87) Numéro de publication internationale:
**WO 98/45374 (15.10.1998 Gazette 1998/41)**

(54) **TRAITEMENT DE CHARGES LAMELLAIRES POUR POLYMERES**

BEHANDLUNG VON LAMELLAREN FÜLLSTOFFEN FÜR POLYMERE

LAMELLAR FILLER PROCESS FOR THE TREATMENT OF POLYMERS

(84) Etats contractants désignés:
**AT BE DE ES FI FR GB IT NL PT SE**

(30) Priorité:  **04.04.1997  FR 9704308**

(43) Date de publication de la demande:
**19.01.2000   Bulletin 2000/03**

(73) Titulaire: **TALC DE LUZENAC**
**09250 Luzenac (FR)**

(72) Inventeurs:
• **FOURTY, Georges**
  **F-31400 Toulouse (FR)**
• **JOUFFRET, Frédéric**
  **F-31400 Toulouse (FR)**
• **MONNOT, Patrice**
  **F-31000 Toulouse (FR)**

(74) Mandataire:
**Cabinet BARRE LAFORGUE & associés**
**95, rue des Amidonniers**
**31000 Toulouse (FR)**

(56) Documents cités:
**WO-A-95/17998**          **WO-A-96/24639**
**WO-A-97/02323**          **WO-A-97/12002**

• **PATENT ABSTRACTS OF JAPAN vol. 11, no. 268
(C-444), 29 août 1987 & JP 62 072739 A
(SUMITUMO CHEM. CO.), 3 avril 1987,**

**Description**

L'invention concerne un procédé de traitement d'un minéral de type lamellaire (c'est-à-dire dont la structure est constituée par un empilement de feuillets élémentaires), en vue d'obtenir une poudre de lamellarité élevée ; elle vise en particulier à fabriquer des poudres de talc, kaolin ou mica, présentant à la fois une granulométrie fine ou très fine et une lamellarité élevée. Elle s'étend à des applications desdites poudres comme charges fonctionnelles de matières thermoplastiques en vue d'augmenter le module d'élasticité en flexion de ces matières pour une résistance au choc donnée. Par "charge fonctionnelle", on entend un additif incorporé à la matière thermoplastique en vue d'en augmenter les performances (par opposition à une "charge passive" qui modifie peu les propriétés de la matière plastique obtenue et sert essentiellement à en abaisser le coût).

Il est maintenant courant d'incorporer aux matières thermoplastiques des charges minérales sous forme de poudres, telles que poudres de talc, kaolin ou mica, en vue d'en augmenter le module d'élasticité en flexion. (Ce module d'élasticité en flexion est défini par la norme "ISO 178" qui décrit la procédure de mesure de ce module : toutes les mesures dudit module qui sont fournies par la suite sont effectuées selon cette norme). Cette augmentation du module d'élasticité en flexion du matériau obtenu permet de réduire les dimensions des pièces fabriquées à partir dudit matériau et donc de les alléger pour une rigidité donnée ; cette réduction de poids est essentielle dans plusieurs secteurs de l'industrie, en particulier dans le secteur automobile et le secteur de l'emballage ; elle conduit également à une diminution des coûts.

A l'heure actuelle, les poudres minérales qui sont incorporées aux matières thermoplastiques sont des poudres fines ; pour le talc en particulier, la granulométrie moyenne est généralement comprise entre 2 et 10 microns et est obtenue par broyage et sélection à sec, en particulier dans des installations de type "microniseur à air ou à vapeur" où le minéral est broyé et sélecté à sec. Pour accroître encore la valeur du module d'élasticité en flexion, il est proposé dans plusieurs publications de réduire la granulométrie des poudres utilisées (cf. par exemple "W. Hobenberger, Fillers, Kumststoffe plast Europe 86, July 1996, 7, pp 973-977" ; "De Wilhelm Schober, Talc for thermoplastics, Industrial minerals, May 1995, pp 49-53") ; l'idée consistant à lier le module d'élasticité en flexion du matériau final obtenu à la granulométrie de la charge est à l'heure actuelle généralisée dans le domaine des charges fonctionnelles pour thermoplastiques, et les professionnels s'attachent à perfectionner les techniques de broyage et de sélection à sec pour obtenir des poudres de plus en plus fines (les techniques de broyage et de sélection à sec étant en effet connues pour permettre d'obtenir industriellement de faibles granulométries).

Il existe par ailleurs un autre type de broyage, dit broyage en voie humide, consistant à disposer le minéral en suspension dans un liquide et à l'agiter en présence d'une charge broyante de billes. Cette technique de broyage en voie humide est généralement utilisée pour broyer et homogénéiser des peintures ou pour broyer des charges minérales dans l'industrie papetière. Par exemple, WO/9712002 et WO/9624639 décrivent des pigments de pâte à papier, ayant subi un broyage en voie humide permettant d'améliorer les qualités optiques des papiers obtenus. L'efficacité du broyage est mesurée par le D.I. obtenu (« Delammination Index » : différence entre une caractéristique de granulométrie du produit fini et une caractéristique de granulométrie du produit soumis au broyage) ; il convient de souligner que cet index D.I. caractérise non pas de façon intrinsèque une poudre mais une opération mise en oeuvre, en terme de granulométrie.

Des études ont été effectuées dans le domaine des matières thermoplastiques pour évaluer l'intérêt d'utiliser ce type de technique de broyage humide pour des charges minérales fonctionnelles à incorporer dans des matières plastiques, mais ces études ont abouti à une conclusion négative : si le module d'élasticité en flexion peut être augmenté (à granulométrie équivalente) en utilisant un broyage en voie humide, cette technique de broyage humide conduit par contre à un défaut rédhibitoire dans la fabrication des matières plastiques, à savoir : une chute considérable de la résistance au choc du matériau plastique obtenu. (La résistance au choc évoquée dans tout ce qui suit est la résistance au choc CHARPY non entaillé à - 20° C, mesurée selon la norme "ISO 179"). On pourra par exemple se reporter à la publication suivante qui évoque ces essais de broyage en voie humide pour réaliser des charges minérales de matières thermoplastiques : " L.J. Michot et al, Journ. Mater. Sci. (1993), 28 (7) pp 1856-66".

L'état de l'art antérieur dans le domaine des charges minérales fonctionnelles incorporables aux matières thermoplastiques est donc actuellement le suivant :

. d'une part, le broyage en voie humide n'a jamais été utilisé industriellement compte tenu des problèmes de résistance aux chocs qu'il entraîne (sauf pour des charges essentiellement à base de mica en vue de réaliser des pièces n'exigeant que des résistances aux chocs très faibles) ,

. d'autre part, la voie de développement industriel pour augmenter le module d'élasticité en flexion du matériau final consiste à affiner la granulométrie des poudres minérales utilisées comme charges, en améliorant les techniques de broyage à sec de ces poudres.

La présente invention se propose de fournir une nouvelle poudre minérale, notamment de talc, kaolin ou mica, adaptée pour être incorporée comme charge fonctionnelle dans une matière thermoplastique en vue d'en augmenter le module d'élasticité en flexion dans des proportions significativement plus élevées que ce qui est obtenu avec les charges connues, et ce, sans réduction de la résistance au choc du matériau final (par rapport aux valeurs obtenues avec lesdites charges connues).

Par "poudre", on entend aussi bien un produit non compacté dans lequel les particules sont libres les unes par rapport aux autres, qu'un produit densifié où les particules ou certaines particules sont provisoirement liées en agglomérats.

La poudre minérale visée par l'invention est en particulier une poudre de talc, de kaolin ou de mica, et se caractérise par :

- . une répartition granulométrique telle que la diamètre médian des particules $D_{50}$ soit sensiblement compris entre 0,5 et 5 microns, le diamètre de coupure $D_{95}$ inférieur à 10 microns et le diamètre de coupure $D_{98}$ inférieur à 20 microns,
- . une surface spécifique (BET) supérieure à 10 m$^2$/g,
- . un indice de lamellarité élevé supérieur à 2,8 et préférentiellement à 4.

Par "diamètre médian $D_{50}$", on entend un diamètre tel que 50 % des particules en poids ont une taille inférieure audit diamètre ; par "diamètre de coupure $D_{95}$", on entend un diamètre tel que 95 % des particules en poids ont une taille inférieure audit diamètre ; par "diamètre de coupure $D_{98}$", on entend un diamètre tel que 98 % des particules en poids ont une taille inférieure audit diamètre. Pour des particules non sphériques, la taille est constituée par le diamètre sphérique équivalent (diamètre de Stokes). Toutes les mesures des diamètres $D_{50}$, $D_{95}$, $D_{98}$ sont effectuées au moyen d'un appareil "sédigraph" (marque déposée) par sédimentation par gravité conformément à la norme AFNOR X11-683.

Par "surface spécifique (BET)", on entend l'aire de la surface des particules de la poudre rapportée à l'unité de masse, déterminée selon la méthode BET par la quantité d'argon adsorbée à la surface desdites particules de façon à former une couche monomoléculaire recouvrant complètement ladite surface (mesure selon la méthode BET, norme AFNOR X 11 - 621 et 622).

"L'indice de lamellarité" caractérise la forme de la particule et plus particulièrement son aplatissement (grande dimension/épaisseur). Dans tout ce qui suit, cet indice de lamellarité sera mesuré par l'écart entre, d'une part, la valeur $D_{moyen}$ de la dimension moyenne des particules de la poudre obtenue par une mesure de granulométrie par diffraction laser Malvern en voie humide, (norme AFNOR NFX11-666) et d'autre part, la valeur du diamètre médian $D_{50}$ obtenue par une mesure par sédimentation au moyen d'un "Sédigraph" (norme AFNOR X11-683), cet écart étant rapporté au diamètre moyen $D_{50}$ : $\frac{D_{moyen} - D_{50}}{D_{50}}$ . On pourra se reporter à l'article "G. BAUDET et J.P RONA, Ind. Min. Mines et Carr. Les techn. juin juillet 1990 pp 55-61" qui montre que cet indice est corrélé au rapport moyen de la plus grande dimension de la particule à sa plus petite dimension.

Par "lamellarité élevée", on entend une poudre dont l'indice de lamellarité est grand, et en particulier supérieur à 2,8.

Les paramètres de granulométrie et de lamellarité sont supposés mesurés sur les particules élémentaires dont est constituée la poudre. Ces mesures visant la géométrie des particules peuvent être perturbées par l'introduction d'additifs susceptibles d'entraîner une floculation ou une agglomération des particules élémentaires (masquant celles-ci lors de la caractérisation). Les mesures seront donc effectuées après élimination éventuelle de ces additifs afin de revenir à la forme naturelle de la poudre (ensemble de particules élémentaires).

La poudre conforme à l'invention associe une granulométrie fine ou très fine et une lamellarité élevée et peut être fabriquée par le procédé suivant :

(a) on met le minéral en suspension dans un liquide avec une granulométrie initiale prédéterminée,
(b) on soumet la suspension à une opération de délaminage adaptée pour réaliser une séparation de feuillets des particules et obtenir une granulométrie inférieure à la granulométrie initiale,
(c) on soumet ensuite la suspension à une sélection de façon à éliminer les particules de taille supérieure à une taille prédéterminée,
(d) on sèche la suspension,
(e) on traite les particules minérales de façon à limiter la création de liaisons fortes irréversibles entre celles-ci.

Le minéral, en particulier talc, kaolin ou mica, est de préférence choisi avec une granulométrie initiale de diamètre médian $D_{50}$ supérieur à 5 microns, l'opération de délaminage conduisant à une granulométrie de diamètre médian $D_{50}$ inférieur à 5 microns. En outre, la sélection est en particulier réalisée pour éliminer au moins 98 % des grosses particules de diamètre supérieur à 20 microns.

Par "minéral de type lamellaire", on entend un minéral dont la structure est constituée par un empilement de feuillets élémentaires. Le procédé de l'invention peut en particulier être mis en oeuvre en utilisant comme minéral du talc, et en particulier un talc macrocristallin prébroyé dont le caractère lamellaire est le plus prononcé ; par "talc macrocristallin", on entend un talc qui contient naturellement des cristaux élémentaires de grande dimension (notamment supérieure à 15 microns) observables sur des lames minces, par opposition à des talcs microcristallins ayant naturellement des cristaux élémentaires de faible dimension. On choisira avantageusement un talc macrocristallin prébroyé présentant un diamètre médian $D_{50}$ supérieur à 10 microns.

Dans tout ce qui suit, on entend par "talc" soit le minéral silicate de magnésium hydraté, soit le minéral chlorite (silicate de magnésium et d'aluminium hydraté), soit un mélange des deux, associé le cas échéant à d'autres minéraux (dolomite,...), soit encore, une substance minérale issue du talc et présentant des propriétés analogues.

Par "séchage", on entend toute opération tendant à réduire la quantité d'eau de la suspension. Ce séchage peut en particulier être réalisé par atomisation ou granulation-séchage.

Le procédé de l'invention peut être mis en oeuvre selon le mode préférentiel de mise en oeuvre suivant :

L'opération de délaminage est avantageusement réalisée par broyage en disposant dans la suspension une charge broyante et en créant une agitation de la suspension jusqu'à obtenir des particules minérales présentant un diamètre médian $D_{50}$ sensiblement compris entre 0,5 et 5 microns, et une surface spécifique (BET) supérieure à 10 $m^2/g$,

La sélection est en particulier une sélection hydrodynamique exécutée de façon à obtenir un diamètre de coupure $D_{95}$ inférieur à 10 microns et un diamètre de coupure $D_{98}$ inférieur à 20 microns.

Dans l'opération de broyage, la charge broyante est constituée par des "billes", ce terme devant être pris dans sa signification la plus générale "d'éléments broyants adaptés pour engendrer par agitation une attrition des particules solides contenues dans la suspension", la forme de ces éléments, généralement sphérique ou sphéroïde, n'étant pas limitative.

L'opération de sélection hydrodynamique est connue en elle-même et opère par sédimentation différentielle : elle permet de séparer les particules en fonction de leur taille (en fait de leur poids) et de sélectionner une répartition désirée (en l'exemple $D_{95} < 10\ \mu m$ et $D_{98} < 20\ \mu m$).

Les analyses ont montré que la poudre obtenue par mise en oeuvre du procédé de l'invention combine les caractéristiques précédemment indiquées, à savoir de façon résumée : une granulométrie fine ou très fine et une lamellarité élevée. Les expérimentations effectuées au moyen de ladite poudre ont permis de constater, de façon inattendue, que celle-ci engendre, lorsqu'elle est utilisée comme charge fonctionnelle dans une matière thermoplastique, une augmentation significative du module d'élasticité en flexion du matériau final obtenu par rapport à une charge comparable connue (c'est-à-dire de même nature chimique et présentant une granulométrie comparable) et ce, sans réduction de la résistance au choc du matériau final. Le module d'élasticité en flexion est généralement augmenté d'au moins 15 %, ce qui constitue un résultat remarquable, la résistance au choc étant identique (aux erreurs de mesure près).

L'invention est l'aboutissement de tâtonnements et essais qui, en premier lieu, ont conduit à remettre en cause le préjugé de l'art antérieur en faveur d'une utilisation de poudres de plus en plus fines. Les inventeurs ont en particulier réalisé une campagne d'essais en fabriquant par broyage à sec des poudres de diverses granulométries s'étalant depuis des poudres fines ($D_{50}$ = 5 $\mu m$) jusqu'à des poudres de très grande finesse ($D_{50}$ = 0,5 $\mu m$) : ils ont pu démontrer que, en fait, le module d'élasticité en flexion passe par un maximum puis décroît lorsque la finesse de la poudre augmente, de sorte qu'il est illusoire de s'attacher à fabriquer des poudres de plus en plus fines : paradoxalement, au-dessous d'une valeur, on obtient un effet opposé à celui recherché.

Cette mise en évidence a conduit les inventeurs à abandonner la technique de broyage à sec (dont l'intérêt essentiel est de permettre d'atteindre industriellement de grande finesse) et à explorer d'autres techniques et en particulier la technique de délaminage par broyage humide en tentant de pallier le défaut qui interdit actuellement l'utilisation de cette technique, à savoir une chute de la résistance aux chocs des matériaux plastiques obtenus. Les inventeurs ont mis en évidence que la combinaison des opérations de traitement suivantes du minéral de départ :

. délaminage pour obtenir un indice de lamellarité élevé et une répartition granulométrique spécifique -définie précédemment-,

. sélection pour sélecter une fraction spécifique -définie précédemment- de cette répartition,

. séchage et traitement des particules minérales pour limiter l'apparition de liaisons fortes entre celles-ci,

permettait d'obtenir une poudre minérale qui combinait une répartition granulométrique fine du type prédéfini et une lamellarité élevée (supérieure à 2,8 et généralement supérieure à 4), et conduisait aux performances précédemment décrites (augmentation du module d'élasticité en flexion, constance de la résistance aux chocs) lorsqu'elle était incorporée comme charge fonctionnelle dans une matière thermoplastique. Ce résultat est difficilement explicable à l'heure actuelle.

Il convient de noter que le traitement des particules minérales pour limiter l'apparition de liaisons fortes est impératif. En effet, le délaminage du minéral crée de nouvelles surfaces qui ont une propension à développer des liaisons (et notamment des liaisons fortes) entraînant la formation d'agglomérats stables : on a pu mettre en évidence que ces agglomérats entraînent une chute considérable de la résistance aux chocs s'ils demeurent lors de l'incorporation de la poudre dans la matière thermoplastique. Par la neutralisation des liaisons fortes, le traitement visé évite la formation de ces agglomérats ou les rend spontanément destructibles lorsqu'ils sont disposés dans une phase organique liquide ou visqueuse. Ce traitement consiste avantageusement à ajouter à la suspension, avant séchage complet, un additif apte à s'adsorber à la surface des particules minérales. Cet additif est de préférence un composé à chaînes carbonées hydrophobes portant des radicaux polaires, en particulier de la famille des amines, des silanes, des siloxanes, des alcools ou des acides. Ces radicaux s'adsorbent sur les surfaces créés lors du délaminage du minéral et neutralisent leur propension à développer des liaisons fortes. Pour réduire les pertes d'additif, celui-ci est de préférence ajouté à la suspension après la sélection hydrodynamique avant le séchage ou au début de celui-ci. La quantité d'additif peut notamment être comprise entre 0,1 % et 2 % en poids par rapport au poids de minéral.

Il faut aussi souligner que le minéral de départ à l'état divisé qui est soumis au procédé de l'invention, doit être relativement grossier ($D_{50}$ supérieur à 5 microns et préférentiellement supérieur à 10 microns). Dans le cas contraire, on ne réussit pas à obtenir une poudre dont l'indice de lamellarité est suffisamment élevé (cet indice demeurant alors inférieur à 2,8), et le module d'élasticité en flexion du matériau final n'est pas significativement amélioré par rapport à celui obtenu avec des charges minérales connues comparables.

De préférence, le minéral de départ est mis en suspension dans de l'eau en présence d'un agent dispersant de façon que le poids de matière sèche rapporté au poids total de la suspension soit sensiblement compris entre 10 % et 60 %.

On obtient ainsi une suspension homogène apte à subir l'opération de broyage (b) dans les meilleures conditions.

Cette opération de broyage est avantageusement réalisée de façon à obtenir un diamètre médian $D_{50}$ des particules sensiblement compris entre 1 et 3,5 microns et une surface spécifique sensiblement comprise entre 15 et 40 m²/g. L'ajustement des conditions de mise en oeuvre du broyage pour obtenir de telles valeurs est à la portée de l'homme du métier ; ces valeurs paraissent conduire à une augmentation plus importante du module d'élasticité en flexion lorsque la poudre est utilisée comme charge fonctionnelle.

Selon un mode de mise en oeuvre avantageux, il est en particulier possible de disposer dans la suspension des billes ayant un diamètre moyen sensiblement compris entre 0,5 et 3 mm, en quantité telle que le volume de billes soit compris entre 60 % et 90 % du volume total (suspension et billes). L'énergie de broyage peut notamment être ajustée à une valeur comprise entre 200 et 400 kilowatt.heure par tonne, la durée du broyage étant fonction de la nature de la poudre et de sa granulométrie de départ, et réglée dans chaque cas pour atteindre les valeurs désirées du diamètre médian $D_{50}$ et de la surface spécifique.

L'opération de sélection hydrodynamique est de préférence réalisée en prévoyant un recyclage des particules les plus grosses rejetées vers une nouvelle opération de broyage. Cette sélection hydrodynamique peut en particulier être exécutée dans un sélecteur à turbines (centrifugation de la suspension dans une turbine munie de fentes de sélection) ou dans un hydrocyclone (création d'un vortex de séparation et sélection) ou dans une centrifugeuse à vis sans fin d'extraction (centrifugation de la suspension dans un bol et séparation par vis d'extraction).

Le séchage de la suspension est avantageusement réalisé de façon à atteindre un taux résiduel de liquide inférieur à 1 %, ce qui permet ensuite une utilisation directe de la poudre comme charge fonctionnelle ; en pratique ce taux résiduel sera de préférence abaissé au-dessous de 0,5 % pour faciliter cette utilisation directe.

Dans le procédé de l'invention, la poudre est de préférence réalisée à l'état compacté de façon à se présenter sous forme d'agglomérats (provisoires) de particules plus faciles à manipuler, en choisissant un mode de séchage approprié, en particulier atomisation ou granulation-séchage. Il convient de souligner que lors de leur incorporation dans la matière thermoplastique, ces agglomérats (au sein desquels les particules sont liées par de simples forces de Van der Waals) se dispersent spontanément lors du mélange et de l'agitation, du fait de la neutralisation préalable des liaisons fortes susceptibles d'apparaître entre particules.

Selon un premier mode de mise en oeuvre, le séchage est réalisé par atomisation, précédée le cas échéant d'une concentration en matière sèche pour obtenir un poids de matière sèche sensiblement compris entre 40 % et 60 % du poids total.

Selon un autre mode de mise en oeuvre, le séchage est réalisé par granulation-séchage consistant à former dans un premier temps des agglomérats de particules et à les chauffer pour en extraire une partie de l'eau sous forme de vapeur, cette granulation-séchage étant, le cas échéant, précédée d'une concentration en matière sèche pour obtenir un poids de matière sèche sensiblement compris entre 50 % et 90 % du poids total.

L'invention s'étend aux applications de la poudre ainsi fabriquée et en particulier aux applications de celle-ci comme charge fonctionnelle dans une matière thermoplastique en vue d'en augmenter le module d'élasticité en flexion pour une résistance au choc donnée.

De telles applications permettent notamment, en utilisant du talc comme minéral de départ, de fabriquer des pièces en matière thermoplastique à base de polypropylène ayant des modules d'élasticité en flexion supérieurs d'au moins 15 % à ceux des pièces obtenues au moyen des charges minérales comparables connues. Le procédé de fabrication de ces pièces se caractérise en particulier en ce que :

- on utilise comme charge fonctionnelle une poudre de talc traitée conformément au procédé défini précédemment,
- on mélange ladite poudre de talc à la matière thermoplastique à l'état fondu, le cas échéant avec des additifs (stabilisant, pigment, agent glissant, antistatique...), de façon que la proportion pondérale de talc soit comprise entre 5 % et 35 % par rapport à la matière thermoplastique,
- on réalise une opération de formage à partir du mélange précité de façon à obtenir une pièce à la forme désirée et à orienter les particules de talc selon des directions préférentielles.

Les conditions spécifiques suivantes permettent de fabriquer des pièces intérieures d'automobile de faible épaisseur telle que tableau de bord, au moyen d'une matière thermoplastique à base de polypropylène contenant une proportion minoritaire d'élastomère :

- on utilise une poudre de talc conforme à l'invention ayant un diamètre médian $D_{50}$ des particules sensiblement compris entre 0,5 et 2,5 microns, un diamètre de coupure $D_{95}$ inférieur à 8 microns, un diamètre de coupure $D_{98}$ inférieur à 15 microns, et une surface spécifique (BET) sensiblement comprise entre 15 et 25 $m^2$/g,
- on mélange ladite poudre de talc à la matière thermoplastique à l'état fondu de façon que la proportion pondérale de talc soit sensiblement comprise entre 15 % et 25 % par rapport à la matière thermoplastique,
- on réalise le formage dans un moule présentant des paroi parallèles de grande surface par rapport à l'épaisseur dudit moule, la matière étant injectée sous pression à travers des moyens d'injection (buses ou filières) propres à engendrer une orientation des particules de talc parallèles aux parois de grande surface du moule.

Un tel procédé permet en particulier de fabriquer des pièces en matière thermoplastique à base de copolymère d'éthylène et de propylène qui se caractérisent en ce qu'elles contiennent une proportion de talc égale à 25 % ($\pm$ 1 %) par rapport à la matière thermoplastique, et en ce qu'elles présentent un module d'élasticité en flexion égal (à $\pm$ 5 % près) à 2 600 mégapascals, et une résistance au choc égale à 40 kilojoules/$m^2$ (à $\pm$ 5 % près) (résistance CHARPY non entaillée à - 20° C).

Les exemples qui suivent illustrent le procédé de traitement conforme à l'invention, les caractéristiques des poudres obtenues et les performances auxquelles celles-ci conduisent lorsqu'elles sont utilisées comme charges fonctionnelles dans des matières thermoplastiques.

<u>EXEMPLE 1</u> PREPARATION D'UNE POUDRE DE TALC CONFORME A L'INVENTION

A/ <u>Mise en suspension du minéral lamellaire</u>

Pour la préparation d'une suspension de talc, on introduit successivement :

- 48 kg d'eau;
- 800 g d'un agent dispersant type "Polysel S (BASF)", soit 0,8-0,9 % d'une solution commerciale par rapport au talc sec en pondéral,
- 32 kg de minéral lamellaire (talc) grossier (granulométrie : 0 - 100 $\mu$m) (provenant de la mine de Val Chisone en Italie).

Cette étape permet de mouiller complètement le talc et d'obtenir une suspension dont la viscosité est compatible avec l'étape de broyage.

B/ <u>Délaminage du talc lamellaire</u>

Cette opération s'effectue par attrition au moyen d'un broyeur type Alpine Discoplex 500 ADP ayant une chambre de broyage de 10 litres. Le broyeur est revêtu de polyuréthane afin d'éviter le grisaillement du talc par usure du revêtement acier. On introduit dans la chambre de broyage une charge en bille de 80 % en volume environ. Les billes utilisées sont en oxyde de zirconium ($Zr_2 O_3$). Le diamètre des billes est de 1 mm. La suspension de talc est alimentée dans le broyeur par une pompe à vis excentrique à un débit de 420 kg/h de pulpe. L'attrition est effectuée à une vitesse de rotation du rotor central de 380 tours/minute en circuit fermé sur le batch pendant le temps nécessaire afin d'obtenir la finesse désirée (contrôlée si nécessaire par diffraction laser) et correspond à une énergie consommée de 305 kw.h/t.

La température (T° < 65° C) et la viscosité de la suspension sont contrôlées pendant toute l'opération de délaminage et peuvent être ajustées par ajout de dispersant dans celle-ci.

Le produit récupéré est ensuite analysé par "Sédigraph" ou diffraction laser afin de contrôler le délaminage. L'étape de délaminage est réalisée en circuit fermé permettant de contrôler directement l'énergie introduite.

C/ Sélection en voie humide du produit délaminé

L'opération de sélection hydrodynamique est réalisée à l'aide d'un sélecteur à turbine "Alpine AHP 200" à partir de la suspension broyée humide précédente.

L'alimentation de la suspension diluée à 14,3 % d'extrait sec se fait avec un débit de 2700 l/heure, soit un débit de talc sec de 425 kg/h. La vitesse de sélection de la turbine est réglée à une vitesse comprise entre 2700 et 3500 tours/minute ; le débit d'extraction des refus est réglé à l'aide d'une pompe à vis excentrique entre 180 et 270 l/ h afin d'obtenir la finesse désirée des particules.

Les produits "fins" sélectés sont récupérés avec un rendement pondéral de 60 à 80 % correspondant à une énergie consommée comprise entre 5 et 50 kW.h/t. Ils sont concentrés par centrifugation jusqu'à obtenir un taux résiduel liquide/solide voisin de 30 à 40 %.

Les produits ont été caractérisés par répartition granulométrique surface spécifique (BET) et indice de lamellarité. Le tableau 1 correspond à des poudres de talc obtenues conformément à l'invention. Le tableau 2 donné à titre de témoin correspond à des poudres obtenues par micronisation à sec à l'aide d'un dispositif de type "jet-mill" correspondant à l'art antérieur et provenant d'un minerai de talc lamellaire de la mine de Val Chisone en Italie.

TABLEAU 1

| EXEMPLES | A | B | C |
|---|---|---|---|
| PROPRIETES DU TALC | | | |
| Distribution granulométrique : | | | |
| D95 ($\mu$m) | 5,2 | 6,2 | 5,4 |
| D50 ($\mu$m) | 1,3 | 1,6 | 1,1 |
| D98 ($\mu$m) | 6,8 | 8,1 | 6,5 |
| Surface spécifique BET ($m^2$/g) | 19,0 | 16,5 | 20,5 |
| Indice lamellarité | 10 | 9 | 9 |

TABLEAU 2

| EXEMPLES | D | E |
|---|---|---|
| PROPRIETES DU TALC | | |
| Distribution | | |
| ganulométrique : | | |
| D95 ($\mu$m) | 10,0 | 8,0 |
| D50 ($\mu$m) | 3,8 | 3,1 |
| D98 ($\mu$m) | 12,0 | 10,0 |
| Surface spécifique BET ($m^2$/g) | 7,0 | 10,0 |
| Indice lamellarité | 1,5 | 2,5 |

D/ Séchage de la suspension

Les produits "fins" sélectés et concentrés sont séchés dans une étuve ventilée à une température comprise entre 60 et 80° C jusqu'à obtenir un taux résiduel liquide/solide inférieur à 0,5 % en poids. Avant séchage complet, on traite le talc avec un additif type octylamine, dans une concentration pondérale de 0,3 % par rapport au talc sec.

EXEMPLE 2 : APPLICATION DE LA POUDRE COMME CHARGE FONCTIONNELLE DANS UN POLYPROPYLENE

Un mélange d'une matière thermoplastique à base de copolymère d'éthylène et de propylène, type "PPT 1052 (Hoechst)" et de la poudre de talc préparée à l'exemple précédent est réalisé à l'état fondu dans une extrudeuse bi-vis corotative "Clextral BC21". La proportion de talc introduite étant égale à 25 %, le compound est obtenu à un débit de 3 kg/h, le fourreau étant maintenu à une température voisine de 200° C et la vitesse de bi-vis comprise entre 250 et 300 tours/minute.

Le mélange, coupé sous forme de granulés, est injecté sur une presse "ARBURG (305 ECO Allrounder)" dans un moule donnant des éprouvettes de type ISO 3167.

Les mesures de chocs Chapy et de module en flexion sont réalisées sur ces éprouvettes ISO selon respectivement les normes ISO 179 et ISO 178.

Une comparaison entre les performances de différents compounds polypropylènes a été effectuée en utilisant comme talcs :

Tableau 3 : des poudres obtenues conformément à l'invention,
Tableau 4 : à titre de témoin, des poudres obtenues par micronisation à sec à l'aide d'un dispositif type "jet-mill", correspondant à l'art antérieur.

TABLEAU 3

| EXEMPLES | A | B | C |
|---|---|---|---|
| EXTRUSION DU MELANGE PP/TALC | | | |
| Polypropylène (%) | 75 | 75 | 75 |
| Talc (%) | 25 | 25 | 25 |
| PROPRIETES MECANIQUES | | | |
| Module d'élasticité en FLEXION (Mpa) | 2560 | 2530 | 2550 |
| Résistance au Choc CHARPY 1eU@-20°C(kj/m$^2$) | 42 | 38 | 40 |

TABLEAU 4

| EXEMPLES | D | D |
|---|---|---|
| EXTRUSION DU MELANGE PP/TALC | | |
| Polypropylène (%) | 75 | 75 |
| Talc (%) | 25 | 25 |
| PROPRIETES MECANIQUES | | |
| Modules d'élasticité en FLEXION (Mpa) | 2200 | 2220 |
| Résistance au Choc CHARPY 1eU@-20°C(kj/m$^2$) | 41 | 42 |

Les résultats comparés des poudres obtenues conformément à l'invention (exemples A, B, C) et des poudres correspondant à l'art antérieur (exemples D, E) ont montré un accroissement de 15 % du module d'élasticité en flexion à même résistance au choc. Les talcs D et E sont des talcs couramment employés dans l'industrie des compounds polypropylènes comme ayant le meilleur compromis module d'élasticité en flexion/résistance au choc.

Cette augmentation de 15 % du module d'élasticité en flexion du matériau obtenu permet de réduire les dimensions des pièces fabriquées et se traduit pratiquement par un allègement de 5 % de la pièce finie pour une rigidité donnée.

**Revendications**

1. Procédé de traitement d'un minéral de type lamellaire constitué par du talc, du kaolin ou du mica, se présentant sous forme de particules formées d'empilements de feuillets élémentaires en vue d'obtenir une charge fonctionnelle pour une matière polymère, **caractérisé en ce que** :

   (a) on met le minéral en suspension dans un liquide avec une granulométrie initiale de diamètre médian $D_{50}$ supérieur à 5 microns,
   (b) on soumet la suspension à une opération de délaminage adaptée pour réaliser une séparation de feuillets des particules et obtenir une granulométrie inférieure à la granulométrie initiale, les particules minérales obtenues présentant un diamètre médian $D_{50}$ sensiblement compris entre 0,5 et 5 microns, une surface spécifique (BET) supérieure à 10 m$^2$/g, et un indice de lamellarité supérieur à 2,8 (l'indice de lamellarité étant défini par le rapport $\frac{D_{moyen} - D_{50}}{D_{50}}$ où "$D_{moyen}$" est la valeur de la dimension moyenne des particules obtenue par une mesure de granulométrie par diffraction laser MALVERN en voie humide et "$D_{50}$" est la valeur du diamètre médian obtenu par sédimentation au moyen d'un "sédigraph"),

(c) on soumet ensuite la suspension à une sélection de façon à éliminer les particules de taille supérieure à une taille prédéterminée,

(d) on sèche la suspension,

(e) on traite les particules minérales de façon à limiter la création de liaisons fortes irréversibles entre celles-ci.

2. Procédé de traitement selon la revendication 1, dans lequel (c) on soumet la suspension à une sélection de façon à éliminer au moins 98 % des grosses particules de diamètre supérieur à 20 microns.

3. Procédé de traitement selon la revendication 1, dans lequel :

(b) on soumet la suspension à une opération de délaminage par broyage en disposant dans la suspension une charge broyante et en créant une agitation de la suspension,

(c) on soumet la suspension à une sélection hydrodynamique de façon à obtenir un diamètre de coupure $D_{95}$ inférieur à 10 microns et un diamètre de coupure $D_{98}$ inférieur à 20 microns,

4. Procédé de traitement selon l'une des revendications 1, 2 ou 3, dans lequel on utilise comme minéral de départ un talc macrocristallin prébroyé.

5. Procédé de traitement selon la revendication 4, **caractérisé en ce qu'**on utilise comme minéral de départ un talc prébroyé présentant un diamètre médian $D_{50}$ supérieur à 10 microns.

6. Procédé de traitement selon Tune des revendications 1, 2, 3, 4 ou 5, **caractérisé en ce que** (a) on met le minéral en suspension dans de l'eau en présence d'un agent dispersant de façon que le poids de matière sèche rapporté au poids total de la suspension soit sensiblement compris entre 10 % et 60 %.

7. Procédé de traitement selon Tune des revendications 1 à 6, **caractérisé en ce que** (b) l'opération de délaminage à laquelle est soumise la suspension est réalisée de façon à obtenir un diamètre médian $D_{50}$ des particules sensiblement compris entre 1 et 3,5 microns et une surface spécifique sensiblement comprise entre 15 et 40 m$^2$/g.

8. Procédé de traitement selon la revendication 3 dans lequel (b) l'opération de broyage est réalisée en disposant dans la suspension une charge de billes en un matériau plus dur que le minéral, le volume de billes étant compris entre 60 % et 90 % du volume total (suspension et billes), les billes ayant un diamètre moyen sensiblement compris entre 0,5 et 3 mm.

9. Procédé de traitement selon la revendication 8, dans lequel (b) l'opération de broyage est réalisée avec une énergie de broyage sensiblement comprise entre 200 et 400 kilowatt.heure par tonne.

10. Procédé de traitement selon la revendication 3, dans lequel (c) les particules les plus grosses rejetées lors de la sélection hydrodynamique sont recyclées vers une nouvelle opération de broyage (b).

11. Procédé selon Tune des revendications 1 à 10, **caractérisé en ce que** (e) le traitement des particules minérales est effectué avant séchage complet de la suspension par ajout d'un additif apte à s'adsorber à la surface des particules en vue de neutraliser leur propension à développer des liaisons fortes.

12. Procédé de traitement selon la revendication 11, **caractérisé en ce que** l'additif (e) est ajouté à la suspension après la sélection hydrodynamique, avant le séchage ou au début de celui-ci.

13. Procédé de traitement selon Tune des revendications 11 ou 12, **caractérisé en ce que** (e) on ajoute comme additif un composé à chaînes carbonées hydrophobes portant des radicaux polaires.

14. Procédé de traitement selon la revendication 13, **caractérisé en ce que** (e) on ajoute comme additif un composé de la famille des amines, des silanes, des siloxanes, des alcools ou des acides.

**15.** Procédé de traitement selon l'une des revendications 11, 12, 13 ou 14, **caractérisé en ce que** (e) on ajoute l'additif de façon que son poids rapporté au poids de minéral soit sensiblement compris entre 0,1 % et 2 %.

**16.** Procédé de traitement selon l'une des revendications 1 à 15, **caractérisé en ce que** (d) le séchage de la suspension est réalisé de façon à atteindre un taux résiduel de liquide/solide inférieur à 1 %.

**17.** Procédé de traitement selon Tune des revendications 1 à 16, permettant d'obtenir une poudre compactée se présentant sous forme d'agglomérats de particules, dans lequel (d) le séchage est réalisé par atomisation, précédée le cas échéant dune concentration en matière sèche pour obtenir un poids de matière sèche sensiblement compris entre 40 % et 60 % du poids total.

**18.** Procédé de traitement selon Tune des revendications 1 à 16, permettant d'obtenir une poudre compactée se présentant sous forme d'agglomérats de particules, dans lequel (d) le séchage est réalisé par granulation-séchage consistant à former dans un premier temps des agglomérats de particules et à les chauffer pour en extraire une partie de l'eau sous forme de vapeur, cette granulation-séchage étant, le cas échéant, précédée dune concentration en matière sèche pour obtenir un poids de matière sèche sensiblement compris entre 50 % et 90 % du poids total.

**19.** Poudre de talc, kaolin ou mica, présentant.une surface spécifique (BET) supérieure à 10 $m^2$/g, une répartition granulométrique telle que la diamètre médian des particules $D_{50}$ soit sensiblement compris entre 0,5 et 5 microns, le diamètre de coupure $D_{95}$ inférieur à 10 microns et le diamètre de coupure $D_{98}$ inférieur à 20 microns, **caractérisée en ce que**, en combinaison avec les caractéristiques de granulométrie et de surface spécifique précitées, ladite poudre possède un indice de lamellarité élevé supérieur à 2,8(l'indice de lamellarité étant défini par le rapport $\frac{D_{moyen} - D_{50}}{D_{50}}$ où "$D_{moyen}$" est la valeur de la dimension moyenne des particules obtenue par une mesure de granulométrie par diffraction laser MALVERN en voie humide et "$D_{50}$" est la valeur du diamètre médian obtenu par sédimentation au moyen d'un "sédigraph").

**20.** Poudre de talc, kaolin ou mica, selon la revendication 19 se présentant à l'état compacté sous forme d'agglomérats de particules, aptes à se redisperser dans une phase liquide ou visqueuse.

**21.** Application de la poudre de talc, kaolin ou mica, conforme à l'une des revendications 19 ou 20, comme charge fonctionnelle dans une matière thermoplastique en vue d'en augmenter le module d'élasticité en flexion pour une résistance au choc donnée.

**22.** Procédé de fabrication d'une pièce en matière thermoplastique à base de polypropylène, chargée au moyen d'une poudre minérale, **caractérisé en ce que** :

- on utilise une poudre de talc traitée conformément au procédé selon l'une des revendications 1 à 18 ayant un indice de lamellarité supérieur à 2,8 (l'indice de lamellarité étant défini par le rapport $\frac{D_{moyen} - D_{50}}{D_{50}}$ où "$D_{moyen}$" est la valeur de la dimension moyenne des particules obtenue par une mesure de granulométrie par diffraction laser MALVERN en voie humide et "$D_{50}$" est la valeur du diamètre médian obtenu par sédimentation au moyen d'un "sédigraph"),
- on mélange ladite poudre de talc à la matière thermoplastique à l'état fondu de façon que la proportion pondérale de talc soit comprise entre 5 % et 35 % par rapport à la matière thermoplastique,
- on réalise une opération de formage à partir du mélange précité de façon à obtenir une pièce à la forme désirée et à orienter les particules de talc selon des directions préférentielles.

**23.** Procédé selon la revendication 22 pour fabriquer une pièce intérieure d'automobile de faible épaisseur telle que tableau de bord, au moyen d'une matière thermoplastique à base de polypropylène contenant une proportion minoritaire d'élastomère, **caractérisé en ce que** :

- on utilise une poudre de talc ayant un diamètre médian $D_{50}$ des particules sensiblement compris entre 0,5 et 2,5 microns, un diamètre de coupure $D_{95}$ inférieur à 8 microns, un diamètre de coupure $D_{98}$ inférieur à 15 microns, et une surface spécifique (BET) sensiblement comprise entré 15 et 25 $m^2$/g,
- on mélange ladite poudre de talc à la matière thermoplastique à l'état fondu de façon que la proportion pondérale de talc soit sensiblement comprise entre 15 % et 25 % par rapport à la matière thermoplastique,
- on réalise le formage dans un moule présentant des paroi parallèles de grande surface par rapport à l'épaisseur dudit moule, la matière étant injectée sous pression à travers des moyens d'injection propres à engendrer une orientation des particules de talc parallèles aux parois de grande surface du moule.

**24.** Pièce en matière thermoplastique à base de copolymère d'éthylène et polypropylène, fabriquée conformément au procédé selon l'une des revendications 22 ou 23, **caractérisée en ce qu'**elle contient une proportion de talc égale à 25 % (± 1 %) par rapport à la matière thermoplastique, et **en ce que** son module d'élasticité en flexion est égal (à ± 5 % près) à 2 600 mégapascals, et sa résistance du choc égale à 40 kilojoules/m$^2$ (à ± 5 % près) (résistance CHARPY non entaillée à - 20° C).

**Patentansprüche**

**1.** Verfahren zur Behandlung eines Minerals des lamellaren Typs, das von Talk, Kaolin oder Glimmer gebildet wird, der in der Form von Partikeln vorliegt, die von Anhäufungen elementarer Plättchen gebildet werden, um einen funktionellen Füllstoff für eine Polymermasse zu erhalten, **gekennzeichnet durch** die folgenden Schritte:

(a) Suspendieren des Minerals in einer Flüssigkeit mit einem anfänglichen mittleren Körnchendurchmesser $D_{50}$ von mehr als 5 Mikron,
(b) Unterziehen der Suspension einem Delaminierungsvorgang, um Plättchen von Partikeln zu trennen und Körnchengrößen zu erhalten, die geringer sind als die anfänglichen Körnchengrößen, wobei die erhaltenen Mineralpartikel einen mittleren Durchmesser $D_{50}$ im Wesentlichen zwischen 0,5 und 5 Mikron, eine spezifische Oberfläche (BET) von mehr als 10 m$^2$/g und einen Lamellaritätsindex von mehr als 2,8 aufweisen (wobei der Lamellaritätsindex **durch** das Verhältnis $\frac{D_{Mittel} - D_{50}}{D_{50}}$ definiert wird, wobei "$D_{Mittel}$" der Wert der mittleren Größe von Partikeln ist, der **durch** eine Körnchengrößenmessung mit einem MALVERN-Nassbeugungslaser erhalten wird, und "$D_{50}$" der Wert des mittleren Durchmessers ist, der **durch** Sedimentierung mit Hilfe eines "Sedigraphs" erhalten wird),
(c) nachfolgendes Unterziehen der Suspension einem Selektionsprozess, um die Partikel mit Größen über einer vorbestimmten Größe zu eliminieren,
(d) Trocknen der Suspension,
(e) Behandeln der Mineralpartikel, um die Erzeugung starker irreversibler Bindungen zwischen ihnen zu begrenzen.

**2.** Behandlungsverfahren nach Anspruch 1, bei dem (c) die Suspension einer Selektion unterzogen wird, um wenigstens 98% grobe Partikel mit einem Durchmesser von mehr als 20 Mikron zu eliminieren.

**3.** Behandlungsverfahren nach Anspruch 1, bei dem:

(b) die Suspension einem Delaminierungsvorgang durch Zermahlen unterzogen wird, indem eine Zermahlcharge in die Suspension gegeben und die Suspension gerührt wird;
(c) die Suspension einer hydrodynamischen Selektion unterzogen wird, um einen Schnittdurchmesser $D_{95}$ von weniger als 10 Mikron und einen Schnittdurchmesser $D_{98}$ von weniger als 20 Mikron zu erhalten.

**4.** Behandlungsverfahren nach Anspruch 1, 2 oder 3, bei dem als Ausgangsmineral ein vorgemahlener makrokristalliner Talk verwendet wird.

**5.** Behandlungsverfahren nach Anspruch 4, **dadurch gekennzeichnet, dass** als Ausgangsmineral ein vorgemahlener Talk verwendet wird, der einen mittleren Durchmesser $D_{50}$ von mehr als 10 Mikron hat.

**6.** Behandlungsverfahren nach Anspruch 1, 2, 3, 4 oder 5, **dadurch gekennzeichnet, dass** (a) das Mineral in Suspension in Wasser in Anwesenheit eines Dispersionsmittels gegeben wird, um das Gewicht der Trockenmasse in Bezug auf das Gesamtgewicht der Suspension im Wesentlichen auf einen Anteil von 10% bis 60% zu bringen.

**7.** Behandlungsverfahren nach einem der Ansprüche 1 bis 6, **dadurch gekennzeichnet, dass** (b) der Delaminierungsvorgang, dem die Suspension unterzogen wird, so durchgeführt wird, dass ein mittlerer Partikeldurchmesser $D_{50}$ im Wesentlichen zwischen 1 und 3,5 Mikron und eine spezifische Oberfläche im Wesentlichen zwischen 15 und 40 m$^2$/g erhalten wird.

**8.** Behandlungsverfahren nach Anspruch 3, bei dem (b) der Zermahlvorgang durchgeführt wird, indem eine Kugelcharge aus einem Material, das härter ist als das Mineral, in die Suspension gegeben wird, wobei das Volumen der Kugeln zwischen 60% und 90% des Gesamtvolumens (Suspension und Kugeln) liegt, wobei die Kugeln einen mittleren Durchmesser im Wesentlichen zwischen 0,5 und 3 mm haben.

9. Behandlungsverfahren nach Anspruch 8, bei dem (b) der Zermahlvorgang mit einer Mahlleistung im Wesentlichen zwischen 200 und 400 Kilowattstunden pro Tonne erfolgt.

10. Behandlungsverfahren nach Anspruch 3, bei dem (c) die gröbsten Partikel, die bei der hydrodynamischen Selektion zurückgewiesen werden, über einen neuen zermahlvorgang (b) recycelt werden.

11. Verfahren nach einem der Ansprüche 1 bis 10, **dadurch gekennzeichnet, dass** (e) die Behandlung der Mineralpartikel vor der vollkommenen Trocknung der Suspension durch Zugabe eines Additivs durchgeführt wird, das auf der Oberfläche der Partikel adsorbiert werden kann, um deren Neigung zur Entwicklung starker Bindungen zu neutralisieren.

12. Behandlungsverfahren nach Anspruch 11, **dadurch gekennzeichnet, dass** das Additiv (e) der Suspension nach der hydrodynamischen Selektion und vor der Trocknung oder am Anfang derselben zugegeben wird.

13. Behandlungsverfahren nach Anspruch 11 oder 12, **dadurch gekennzeichnet, dass** (e) als Additiv eine Verbindung mit hydrophoben Kohlenstoffketten zugegeben wird, die polare Radikale trägt.

14. Behandlungsverfahren nach Anspruch 13, **dadurch gekennzeichnet, dass** (e) als Additiv eine Verbindung der Familie der Amine, der Silane, der Siloxane, der Alkohole oder der Säuren zugegeben wird.

15. Behandlungsverfahren nach Anspruch 11, 12, 13 oder 14, **dadurch gekennzeichnet, dass** (e) das Additiv so zugegeben wird, dass sein Gewicht bezogen auf das Mineralgewicht im Wesentlichen zwischen 0,1% und 2% liegt.

16. Behandlungsverfahren nach einem der Ansprüche 1 bis 15, **dadurch gekennzeichnet, dass** (d) die Trocknung der Suspension so durchgeführt wird, dass ein Restanteil von Flüssigkeit zu Feststoff von weniger als 1% erreicht wird.

17. Behandlungsverfahren nach einem der Ansprüche 1 bis 16, mit dem ein verdichtetes Pulver erhalten werden kann, das in der Form eines Partikelagglomerats vorliegt, in dem (d) die Trocknung durch Zerstäubung erfolgt, ggf. nach einer Trockenmassenkonzentration, um ein Trockenmassengewicht zu erhalten, das im Wesentlichen zwischen 40% und 60% des Gesamtgewichts liegt.

18. Behandlungsverfahren nach einem der Ansprüche 1 bis 16, mit dem ein verdichtetes Pulver erhalten werden kann, das in der Form eines Partikelagglomerats vorliegt, in dem (d) die Trocknung durch Körnchentrocknung erfolgt, die darin besteht, in einer ersten Phase Partikelagglomerate zu bilden und diese zu erhitzen, um daraus einen Teil des Wassers in der Form von Dampf zu extrahieren, wobei dieser Körnchentrocknung ggf. eine Trockenmassenkonzentration vorangeht, um ein Trockenmassengewicht im Wesentlichen zwischen 50% und 90% des Gesamtgewichts zu erhalten.

19. Pulver aus Talk, Kaolin oder Glimmer mit einer spezifischen Oberfläche (BET) von mehr als 10 $m^2/g$, einer solchen Körnchenverteilung, dass der mittlere Partikeldurchmesser $D_{50}$ im Wesentlichen zwischen 0,5 und 5 Mikron liegt, der Schnittdurchmesser $D_{95}$ kleiner als 10 Mikron und der Schnittdurchmesser $D_{98}$ kleiner als 20 Mikron ist, **dadurch gekennzeichnet, dass** in Kombination mit diesen granulometrischen Kennwerten und der oben erwähnten spezifischen Oberfläche das genannte Pulver einen erhöhten Lamellaritätsindex von mehr als 2,8 besitzt (wobei der Lamellaritätsindex durch das Verhältnis $\frac{D_{Mittel} - D_{50}}{D_{50}}$ definiert wird, wobei "$D_{Mittel}$" der Wert der mittleren Größe von Partikeln ist, der durch eine Körnchengrößenmessung mit einem MALVERN-Nassbeugungslaser erhalten wird, und "$D_{50}$" der Wert des mittleren Durchmessers ist, der durch Sedimentierung mit Hilfe eines "Sedigraphs" erhalten wird).

20. Pulver aus Talk, Kaolin oder Glimmer nach Anspruch 19, das in einem verdichteten Zustand in der Form eines Partikelagglomerats vorliegt und in einer flüssigen oder viskosen Phase redispergiert werden kann.

21. Verwendung des Pulvers aus Talk, Kaolin oder Glimmer nach Anspruch 19 oder 20 als funktionellen Füllstoff in einer Thermoplastmasse, um deren Biegefestigkeitsmodul für eine bestimmte Schockbeständigkeit zu erhöhen.

EP 0 971 988 B1

**22.** Verfahren zur Herstellung eines Teils aus Thermoplastmasse auf der Basis von Polypropylen, die wenigstens ein Mineralpulver beinhaltet, **gekennzeichnet durch** die folgenden Schritte:

- Verwendung eines Talkpulvers, das gemäß einem Verfahren nach einem der Ansprüche 1 bis 18 behandelt wurde, mit einem Lamellaritätsindex von mehr als 2,8 (wobei der Lamellaritätsindex **durch** das Verhältnis $\frac{D_{Mittel} - D_{50}}{D_{50}}$ definiert wird, wobei "$D_{Mittel}$" der Wert der mittleren Größe von Partikeln ist, der **durch** eine Körnchengrößenmessung mit einem MALVERN-Nassbeugungslaser erhalten wird, und "$D_{50}$" der Wert des mittleren Durchmessers ist, der **durch** Sedimentierung mit Hilfe eines "Sedigraphs" erhalten wird),
- Mischen des genannten Talkpulvers mit der Thermoplastmasse im geschmolzenen Zustand, so dass der Gewichtsanteil des Talks zwischen 5% und 35% in Bezug auf die Thermoplastmasse liegt,
- Durchführen eines Formgebungsvorgangs auf der Basis des oben genannten Gemischs, um ein Teil mit der gewünschten Form und der gewünschten Ausrichtung der Talkpartikel gemäß den bevorzugten Richtungen zu erhalten.

**23.** Verfahren nach Anspruch 22 zur Herstellung eines Kraftfahrzeuginnenteils mit geringer Dicke wie z.B. die Instrumententafel mit Hilfe einer Thermoplastmasse auf der Basis von Polypropylen, das einen geringen elastomeren Anteil besitzt, **gekennzeichnet durch** die folgenden Schritte:

- Verwenden eines Talkpulvers mit einem mittleren Partikeldurchmesser $D_{50}$ im Wesentlichen zwischen 0,5 und 2,5 Mikron, einem Schnittdurchmesser $D_{95}$ von weniger als 8 Mikron, einem Schnittdurchmesser $D_{98}$ von weniger als 15 Mikron und einer spezifischen Oberfläche (BET) im Wesentlichen zwischen 15 und 25 $m^2/g$,
- Mischen des genannten Talkpulvers mit der Thermoplastmasse im geschmolzenen Zustand, um einen Gewichtsanteil an Talk im Wesentlichen zwischen 15% und 25% in Bezug auf die Thermoplastmasse zu erhalten,
- Durchführen der Formgebung in einer Form mit parallelen Wänden mit einer großen Oberfläche in Bezug auf die Dicke der genannten Form, wobei die Masse unter Druck mit geeigneten Einspritzmitteln eingespritzt wird, um eine Ausrichtung der parallelen Talkpartikel an den Wänden der großen Oberfläche der Form zu erzielen.

**24.** Teil aus Thermoplastmasse auf der Basis eines Copolymers aus Ethylen und Polypropylen, hergestellt gemäß dem Verfahren nach Anspruch 22 oder 23, **dadurch gekennzeichnet, dass** es einen Talkanteil von 25% ($\pm$ 1%) in Bezug auf die Thermoplastmasse hat, und dadurch, dass sein Biegefestigkeitsmodul gleich ($\pm$ 5%) 2600 Megapascal und seine Schockbeständigkeit 40 Kilojoule/$m^2$ ($\pm$ 5%) ist (ungekerbte CHARPY-Beständigkeit von -20°C).

**Claims**

**1.** Process for treating a mineral of lamellar type consisting of talc, kaolin or mica, in the form of particles formed from stacks of elementary leaflets, in order to obtain a functional filler for a polymer material, **characterized in that**:

(a) the mineral, with an initial median particle size diameter $D_{50}$ of greater than 5 microns, is placed in suspension in a liquid,
(b) the suspension is subjected to a delamination operation adapted to produce a separation of leaflets of the particles and to obtain a particle size that is less than the initial particle size, the mineral particles obtained having a median diameter $D_{50}$ that is substantially between 0.5 and 5 microns, a specific surface area (BET) of greater than 10 $m^2/g$, and a lamellarity index of greater than 2.8 (the lamellarity index being defined by the ratio $\frac{D_{mean} - D_{50}}{D_{50}}$ in which "$D_{mean}$" is the value of the mean particle size obtained by a particle size measurement by wet Malvern laser scattering and "$D_{50}$" is the value of the median diameter obtained by sedimentation using a "sedigraph"),
(c) the suspension is then subjected to a selection so as to remove the particles that are larger than a predetermined size,
(d) the suspension is dried,
(e) the mineral particles are treated so as to limit the creation of irreversible strong bonds between them.

**2.** Treatment process according to Claim 1, in which (c) the suspension is subjected to a selection so as to remove at least 98% of the coarse particles greater than 20 microns in diameter.

**3.** Treatment process according to Claim 1, in which:

(b) the suspension is subjected to a delamination operation by grinding, by depositing in the suspension a grinding filler and by stirring the suspension,
(c) the suspension is subjected to a hydrodynamic selection so as to obtain a $D_{95}$ cut-off diameter of less than 10 microns and a $D_{98}$ cut-off diameter of less than 20 microns.

4. Treatment process according to one of Claims 1, 2 and 3, in which a preground macrocrystalline talc is used as starting mineral.

5. Treatment process according to Claim 4, **characterized in that** a preground talc with a median diameter $D_{50}$ of greater than 10 microns is used as starting mineral.

6. Treatment process according to one of Claims 1, 2, 3, 4 and 5, **characterized in that** (a) the mineral is placed in suspension in water in the presence of a dispersant such that the weight of solids relative to the total weight of the suspension is substantially between 10% and 60%.

7. Treatment process according to one of Claims 1 to 6, **characterized in that** (b) the delamination operation to which the suspension is subjected is performed so as to obtain a median particle diameter $D_{50}$ that is substantially between 1 and 3.5 microns and a specific surface area that is substantially between 15 and 40 $m^2/g$.

8. Treatment process according to Claim 3, in which (b) the grinding operation is performed by charging the suspension with beads made of a material that is harder than the mineral, the volume of beads being between 60% and 90% of the total volume (suspension and beads), the beads having a mean diameter that is substantially between 0.5 and 3 mm.

9. Treatment process according to Claim 8, in which (b) the grinding operation is performed with a grinding energy that is substantially between 200 and 400 kilowatt.hours per tonne.

10. Treatment process according to Claim 3, in which (c) the coarsest particles rejected during the hydrodynamic selection are recycled into a new grinding operation (b).

11. Process according to one of Claims 1 to 10, **characterized in that** (e) the treatment of the mineral particles is carried out before complete drying of the suspension, by adding an additive capable of becoming absorbed onto the surface of the particles so as to neutralize their propensity to develop strong bonds.

12. Treatment process according to Claim 11, **characterized in that** the additive (e) is added to the suspension after the hydrodynamic selection, before or at the start of the drying operation.

13. Treatment process according to either of Claims 11 and 12, **characterized in that** (e) a compound containing hydrophobic carbon-based chains bearing polar radicals is added as additive.

14. Treatment process according to Claim 13, **characterized in that** (e) a compound from the family of amines, silanes, siloxanes, alcohols or acids is added as additive.

15. Treatment process according to one of Claims 11, 12, 13 and 14, **characterized in that** (e) the additive is added such that its weight relative to the weight of mineral is substantially between 0.1% and 2%.

16. Treatment process according to one of Claims 1 to 15, **characterized in that** (d) the drying of the suspension is performed so as to achieve a residual content of liquid/solid of less than 1%.

17. Treatment process according to one of Claims 1 to 16, for obtaining a compacted powder that is in the form of aggregates of particles, in which (d) the drying operation is performed by spraying, where appropriate preceded by a concentration of solids to obtain a weight of solids that is substantially between 40% and 60% of the total weight.

18. Treatment process according to one of Claims 1 to 16, for obtaining a compacted powder that is in the form of aggregates of particles, in which (d) the drying operation is performed by a granulation-drying operation which consists in forming aggregates of particles in a first stage, and in heating them to extract some of the water therefrom in the form of steam, this granulation-drying operation being preceded, where appropriate, by a concentration of solids to obtain a weight of solids that is substantially between 50% and 90% of the total weight.

19. Talc, kaolin or mica powder having a specific surface area (BET) of greater than 10 $m^2/g$, a particle size distribution such that the median particle diameter $D_{50}$ is substantially between 0.5 and 5 microns, the $D_{95}$ cut-off diameter is less than 10 microns and the $D_{98}$ cut-off diameter is less than 20 microns, **characterized in that**, in combination with the particle size and specific surface area characteristics mentioned above, the said powder has a high lamellarity index of greater than 2.8 (the lamellarity index being defined by the ratio $\frac{D_{mean} - D_{50}}{D_{50}}$ in which "$D_{mean}$" is the value of the mean particle size obtained by a particle size measurement by wet Malvern laser scattering and "$D_{50}$" is the value of the median diameter obtained by sedimentation using a "sedigraph").

20. Talc, kaolin or mica powder according to Claim 19, which is in compacted form in the form of aggregates of particles that are capable of becoming redispersed in a viscous or liquid phase.

21. Application of the talc, kaolin or mica powder, in accordance with either of Claims 19 and 20, as a functional filler in a thermoplastic material in order to increase the bending elastic modulus for a given impact strength.

22. Process for manufacturing a component made of polypropylene-based thermoplastic material filled with a mineral powder, **characterized in that**:

   - a talc powder treated in accordance with the process according to one of Claims 1 to 18 and having a lamellarity index of greater than 2.8 is used (the lamellarity index being defined by the ratio $\frac{D_{mean} - D_{50}}{D_{50}}$ in which "$D_{mean}$" is the value of the mean particle size obtained by a particle size measurement by wet Malvern laser scattering and "$D_{50}$" is the value of the median diameter obtained by sedimentation using a "sedigraph"),
   - the said talc powder is mixed with the thermoplastic material melt such that the weight proportion of talc is between 5% and 35% relative to the thermoplastic material,
   - a moulding operation is performed using the abovementioned mixture so as to obtain a component having the desired shape and so as to orient the talc particles in preferential directions.

23. Process according to Claim 22, for manufacturing an internal component of low thickness for a motor vehicle, such as a dashboard, using a polypropylene-based thermoplastic material containing a small proportion of elastomer, **characterized in that**:

   - a talc powder with a median particle diameter $D_{50}$ that is substantially between 0.5 and 2.5 microns, a $D_{95}$ cut-off diameter of less than 8 microns, a $D_{98}$ cut-off diameter of less than 15 microns and a specific surface area (BET) that is substantially between 15 and 25 $m^2/g$ is used,
   - the said talc powder is mixed with the thermoplastic material melt such that the weight proportion of talc is substantially between 15% and 25% relative to the thermoplastic material,
   - the moulding operation is performed in a mould whose parallel walls are of large surface area relative to the thickness of the said mould, the material being injected under pressure via injection means that are capable of giving rise to an orientation of the talc particles parallel to the walls of large surface area of the mould.

24. Component made of thermoplastic material based on a copolymer of ethylene and polypropylene, manufactured in accordance with the process according to either of Claims 22 and 23, **characterized in that** it contains a proportion of talc equal to 25% ($\pm$ 1%) relative to the thermoplastic material, and **in that** its bending elastic modulus is equal to 2 600 megapascals (to within $\pm$ 5%) and its impact strength is equal to 40 kilojoules/$m^2$ (to within $\pm$ 5%) (non-notched Charpy strength at -20°C).